# EUROPEAN PATENT APPLICATION

(11) **EP 4 456 448 A1**
(43) Date of publication of application: **30.10.2024**
(21) Application number: 23170391.9
(22) Date of filing: 27.04.2023
(51) Int. Cl.: H04B 10/2575, H04B 10/278, H04J 14/02

(54) **FIBER TO THE ROOM**

(71) Applicant: Nokia Solutions and Networks Oy, 02610 Espoo (FI)
(72) Inventor: Maes, Jochen, 2018 Antwerp (BE)
(74) Representative: Auger, Hannah Maria

(57) **Abstract**

There is herein disclosed a system made up of a network of connected apparatus. The network of connected apparatus include a first apparatus, a second apparatus and a third apparatus connected in series to establish a fiber optic bus. The second apparatus includes a first port connected to the first apparatus, a second port connected to a node and a third port connected to the third apparatus. The second apparatus further includes a passive device comprising means for dividing an input fiber optic signal received at the second port into output signals to be transmitted from the first and third port.

## Description

### Field

Example embodiments may relate to a systems and methods of fixed network technology, in particular, relating to the concept of bringing fiber to the room (FTTR) for in-house connectivity.

### Background

FTTR technology refers to a home networking solution that uses optical fiber as the transmission medium and connects the Internet to rooms in a building or house through optical communication equipment such as main gateways and optical splitters. Wi-Fi communication has become the primary choice for most businesses and families to surf the Internet and there is demand to provide FTTR.

Known FTTR solutions comprise using a passive optical network (PON). A PON is a fiber-optic telecommunications network that delivers high-speed access to end-customers. PONs implement a point-to-multipoint topology, in which a single optical fiber serves multiple endpoints by using unpowered (passive) fiber optic splitters to divide the fiber bandwidth among multiple access points.

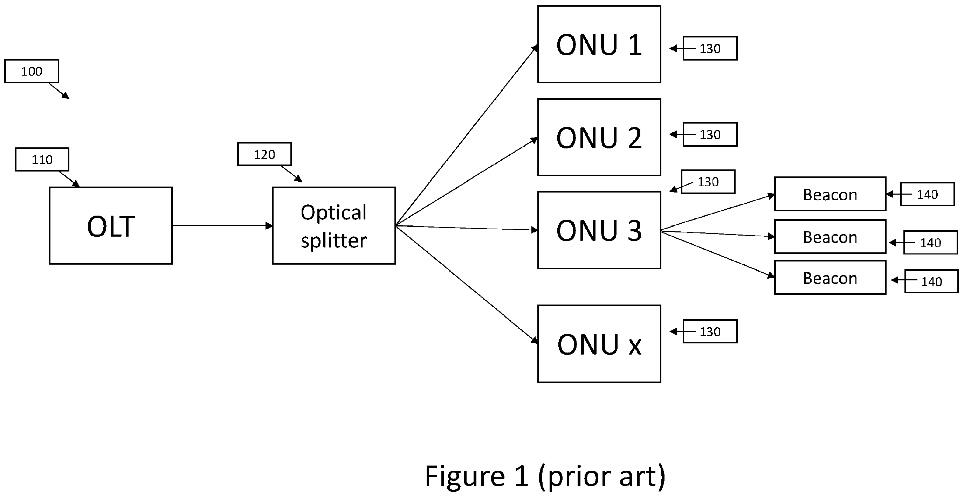

An example PON network, according to the prior art is shown in Figure 1. There are three distinct devices in the network: the optical line terminal (OLT) 101, the optical network units (ONUs) 130 or optical network terminals (ONTs, not shown) and the optical splitter 120. PON technology always works under transmission between the OLT 110 and the different ONU's 130 through the optical splitter 120, which multiplex or demultiplex signals based on their origin and destination. For Fiber To The Home (FTTH) networks, the OLT 110 may be located in provider's central switching office. This equipment serves as the point of origination for downstream transmissions coming from and upstream transmissions going to the service provider's network. The optical splitter 120 is used to split the downstream fiber optic light into several parts at a certain ratio. In access networks, this ratio is typically symmetric, e.g. a 1:2, 1:4 or 1:8 split with equal power on each of the two, four or eight branches. These optical signals are then sent to individual subscribers. The ONU's 130 terminate the optical signals transmitted via fiber. The data conveyed over the PON is then further distributed throughout the home. For example, Wi-Fi beacons 140 as shown in Figure 1 can be connected using Ethernet over twisted pair cables to provide connectivity. Alternatively, a Wi-Fi transceiver is integrated with the ONU in a single device and connects to other Wi-Fi beacons using wirless mesh technology.

The use of PON has been proposed for FTTR. In this case, an OLT is placed at the termination point of the network operator, and an ONU is placed in each room that requires a fiber connection.

Advantages of PON technology include high bandwidth, long distance and low cost of passive elements and installation, however, the problem with existing topologies is that it assumes that there is an 'ideal' central location to/from which all data should be communicated.

The subject matter disclosed herein provides an alternative approach, instead opting to use a fiber optic bus.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described a system comprising a network of connected apparatus, comprising: a first apparatus, a second apparatus and a third apparatus connected in series to establish a fiber optic bus. The second apparatus comprises a first port connected to the first apparatus, a second port connected to a node, and a third port connected to the third apparatus. The second apparatus also comprises a passive device comprising means for dividing an input fiber optic signal received at the second port into output signals to be transmitted from the first and third port.

According to a second aspect, there is described a system comprising a network of connected apparatus, comprising: a first apparatus, a second apparatus and a third apparatus connected in series to establish a fiber optic bus. The second apparatus comprises a first port connected to the first apparatus, a second port connected to a node and a third port connected to the third apparatus. The second apparatus further comprises a passive device comprising means for dividing an input fiber optic signal received at the first port into output signals to be transmitted from the second and third port.

The systems may further be configured such that the node is a master device comprising at least one of: a passive optical network optical network unit (PON ONU), a fixed wireless access customer premise equipment (FWA CPE), a modem, a router and a residential gateway (RGW).

The systems may further be configured such that at least one of the first, second and third apparatus are connected to a client device or peripheral device comprising at least one of: a Wi-Fi beacon, set top box, a television, a network attached storage, a computer and a smart home device.

The systems may further be configured such that the passive device comprises a symmetric coupling configuration with a coupling ratio of 50:50.

The systems may further be configured such that the passive device comprises an asymmetric coupling configuration with a coupling ratio within a range of 90:10 to 50:50. Alternatively, the systems may further be configured such that the passive device comprises a coupling configuration comprising a first asymmetric coupler connected to the first port and a second asymmetric coupler connected to the third port and a coupler connected to the second port. Further alternatively, the systems may further be configured such that the second apparatus further comprises a fourth port connected to a second node or a fourth apparatus, and the passive device comprises a coupling configuration comprising at least four couplers.

The systems may further be configured such that the passive device comprises a switch configured to turn on and/or off at least one of the first, second, third or fourth ports.

The systems may further be configured such that the wavelength of the fiber optic signal transmitted on the second port is different from the wavelength of the fiber optic signal received on the second port.

The systems may further be configured such that the apparatus further comprises means for: transmitting a first fiber optic signal from the second port at a first time and receiving a second fiber optic signal at the second port at a second time. The first and second fiber optic signals may have the same wavelength and the second time is later than the first time.

The systems may further be configured such that the connected apparatus is distributed throughout a building and wherein the first, second and third apparatus are built into wall sockets or wall mounted.

The systems may further be configured such that the second port comprises a colour, form factor or unique identifier which is different from those of the first and third ports.

According to a third aspect, there is described a method comprising configuring a system comprising a network of connected apparatus. The network of connected apparatus comprises a first apparatus, a second apparatus and a third apparatus connected in series to establish a fiber optic bus. The second apparatus comprises a first port connected to the first apparatus, a second port connected to a node, and a third port connected to the third apparatus. The second apparatus also comprises a passive device comprising means for dividing an input fiber optic signal received at the second port into output signals to be transmitted from the first and third port. The method further comprises receiving the input fiber optic signal at the second port. The method further comprises dividing the input fiber optic signal into a first output signal and a second output signal. The method further comprises transmitting the first output signal from the first port. The method further comprises transmitting the second output signal from the third port.

According to a fourth aspect there is described a method comprising configuring a system comprising a network of connected apparatus. The network of connected apparatus comprises a first apparatus, a second apparatus and a third apparatus connected in series to establish a fiber optic bus. The second apparatus comprises a first port connected to the first apparatus, a second port connected to a node, and a third port connected to the third apparatus. The second apparatus also comprises a passive device comprising means for dividing an input fiber optic signal received at the first port into output signals to be transmitted from the second and third port. The method further comprises receiving the input fiber optic signal at the first port. The method further comprises dividing the input fiber optic signal into a first output signal and a second output signal. The method further comprises transmitting the first output signal from the second port. The method further comprises transmitting the second output signal from the third port.

The method according to the third and four aspect disclosed herein may also comprises elements of the system discussed herein.

According to a fifth aspect, there is provided a computer program product comprising a set of instructions which, when executed on an apparatus, is configured to cause the apparatus to carry out the method of any preceding method definition.

According to a fourth aspect, there is provided a non-transitory computer readable medium comprising program instructions stored thereon to cause the apparatus to carry out the method of any preceding method definition.

### Brief Description of the Drawings

Example embodiments will now be described by way of non-limiting example, with reference to the accompanying drawings, in which:
Fig. 1 shows, by way of example, a network architecture of a PON communication system according to the prior art.
Fig. 2 shows, by way of example, a network architecture of a fiber optic bus.
Fig. 3 shows, by way of example, a network architecture of a fiber optic bus according to a one-to many configuration.
Fig. 4 shows, by way of example, a network architecture of a fiber optic bus according to an any-to-any configuration.
Fig. 5 shows, by way of example, three alternative options for passive devices.
Fig. 6 shows, by way of example, further alternative examples of passive devices.
Fig. 7 shows, by way of example, a flowchart of a method.
Fig. 8 shows, by way of example, a flowchart of a method.
Fig. 9 shows, by way of example, a block diagram of an apparatus.

### Detailed Description

Example embodiments may relate to an apparatus, method and/or computer program for providing fiber to the room (FTTR).

The proposed solution utilizes a bus topology (rather than a physical P2P or P2MP topology). The idea is enabled by designing passive devices that can be located in optical termination sockets or fiber optic apparatus that route the desired amount of light to the different output ports of the passive device. The passive device may comprise 2×2 couplers, circulators and other optical passive devices.

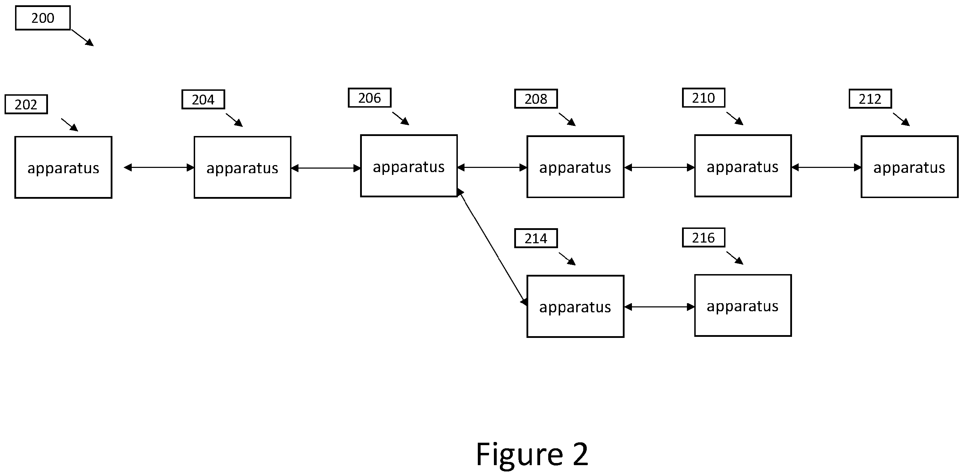

Figure 2 shows a system 200 comprising a network of connected apparatus. Figure 2 illustrates an example fiber distribution system 200, which may be installed within a communications architecture (e.g., building network). The fiber distribution system 200 may be configured to support local area network (LAN) traffic. The structure of the system 200 may provide distribution of both time- and wavelength-division multiplexed signals while meeting the technical requirements of both forms of traffic with independent active end equipment. The fiber distribution systems 200 disclosed herein may advantageously bypass the limitations of a conventional copper-based LAN and PON technology. Further, strict regulatory and optimization requirements within commercial deployment, which may include operating and space limitations, may be met by the customization of the fiber distribution according to the proposed system 200.

The infrastructure of the system 200 may advantageously provide materials and installation cost savings as well as simplify and reduce redundancies as compared with conventional parallel systems. Cost savings may be provided by the reduced length and number of cables required, as well as minimizing the number of enclosures needed, reducing the expense of hardware as well as labour. For example, the disclosed 'daisy-chain' type architecture in a passive optical local area network may use less cable/fiber than the conventional star architecture of cables (e.g. used in PON technology).

The passive optical infrastructure of the system 200 may support multiple types of communication protocols and transports (e.g., common public radio interface (CPRI), open radio access network (ORAN), Ethernet, passive optical network (PON), Home Networking (G.hn), and serve a variety of applications, such as LAN-based applications, Wi-Fi, cellular (e.g., 4G or 5G using different radio access network (RAN) splits and/or architectures).

The network of connected apparatus includes multiple apparatus 202, 204, 206, 208, 210, 212. Some of the apparatus 202, 204, 206, 208, 210, 212 are connected in series and establish a fiber optic bus on a segment of the network. The proposed fiber optic bus may comprise at least three apparatus. The proposed fiber optic bus comprises at least a first apparatus 202, a second apparatus 204 and a third apparatus 206 connected in series.

Physically, the bus topology is constructed by connecting fibers using passive devices in the each of the apparatus along the fiber optic bus. For example, in a scenario where only a first apparatus 202, a second apparatus 204 and a third apparatus 206 are sequentially connected in series, at least the second apparatus 204 must comprise a passive device. Optionally, the first apparatus 202 and the third apparatus may also contain a passive device.

The connected apparatus may be distributed throughout a home and the first 202, second 204 and/or third apparatus 206 may be built into wall sockets or wall mounted.

The fiber optic bus may be used in two circumstances: 1) to provide one-to-many communication and 2) to provide any-to-any communication.

### One-to-many communication

The system may be configured to provide one-to-many communication.

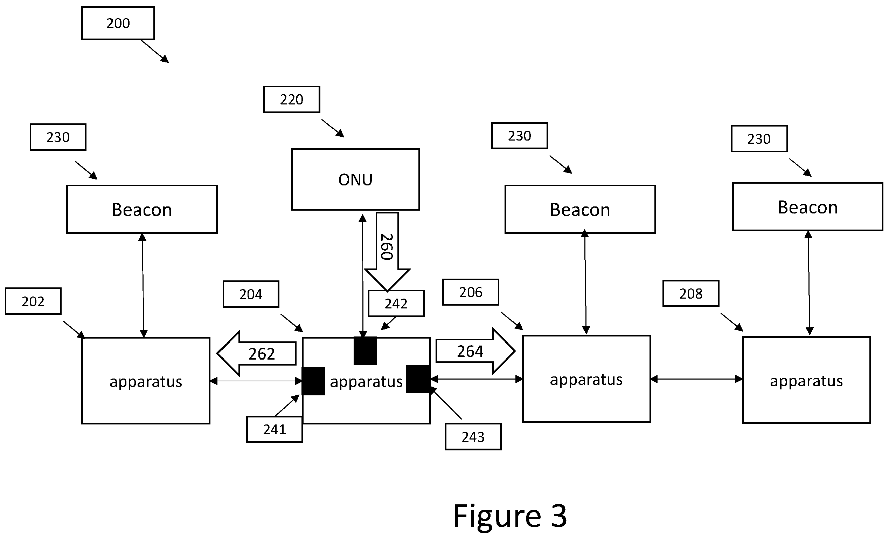

Figure 3 exemplifies one-to-many communication. The system of figure 3 is configured in the same way as the system of figure 2. In the example of figure 3, a first apparatus 202, second apparatus 204, third apparatus 206 and fourth apparatus 208 are connected in series to establish the fiber optic bus. Figure 3 shows that the second apparatus 204 may comprise a first port 241 connected to the first apparatus 202, a second port 242 connected to a node 220 and a third port 243 connected to the third apparatus 206. Each of the first 241, second 242 and third ports 243 may be a different colour, form factor or contain a unique identifier so that each of the ports can be distinguished from one another. For instance, the form factor of the connector on port 242 towards a node may be different from the form factor of the connectors on ports 241 and 243 towards the other apparatus 202 and 206. In this way, mistakes in the installation are avoided and it becomes easier for an end user to perform a self-install.

The node 220 may be a master device comprising at least one of a passive optical network optical network unit (PON ONU), a fixed wireless access customer premise equipment (FWA CPE), a modem, a router and a residential gateway (RGW).

At least one of the first apparatus 202, second apparatus 204, third apparatus 206 and fourth apparatus 208 may be connected to a client device or peripheral device. The client device or peripheral device may be Wi-Fi beacon, set top box, a television, a network attached storage, a computer and a smart home device, although other alternative client and peripheral devices are possible.

The system of figure 3 may further comprise a passive device (not shown in figure 3). The passive device is designed to divide an input fiber optic signal 260 received at the second port 242 into output signals 262, 264 to be transmitted from the first port 241 and third port 243. The passive device receives an input fiber optic signal 260 at the second port 242. The input fiber optic signal was sent from the node 220 (for example, from a modem). Once the passive device receives the input fiber optic signal 260 it divides the signal into a first output signal 262 and a second output signal 264. The first output signal 262 is transmitted from the first port 242 which is connected to the first apparatus 202, thereby, the first apparatus 202 receives a portion of the input fiber optic signal transmitted from the node 220. The second output signal 264 is transmitted from the third port 243 which is connected to the third apparatus 206, thereby, the third apparatus 206 receives the remaining portion of the input fiber optic signal 260 transmitted from the node 220. In this way, the passive device acts as a means for dividing the input optical fiber signal 260 received from the node 220 in either direction along the fiber optic bus. The first output signal 262 is transmitted in a first direction along the fiber optic bus and the second output signal 264 is directed along a second opposite direction along the fiber optic bus.

This configuration allows the input fiber optic signal 260 that is sent from the node 220 to be directed along the fiber optic bus such that the signal sent from the node 220 is able to communicate with all of the apparatus attached to the fiber optic bus and also any of the client devices or peripheral devices 230 that may be in connected with the apparatus. For example, the node 220 (e.g. a modem) may transmit information to each Wi-Fi beacon 230 attached to the fiber optic bus via the first, third or fourth apparatus, such as shown in figure 3. This provides one-to-many communication. One-to-many communication, enables the use of a point-to-multipoint communication protocol, such as PON technology. Example PON protocol standards are GPON, XGS-PON and 25G-PON. In this case, the fiber optic signal 260 is generated by a PON OLT. The PON OLT may be embedded in a small form factor pluggable (SFP) module that plugs into the node 220. Likewise the optic signals 262 and 264 may be received by ONUs that may be embedded in SFPs plugged into client devices 230. The use of PON technology is favorable, because it is relatively cheap and mature technology. It also allows appropriate network management, e.g. by an internet provider that seeks to augment its portfolio with a managed FTTR offering.

### Any-to-any communication

The system may also be configured to provide any-to-any communication.

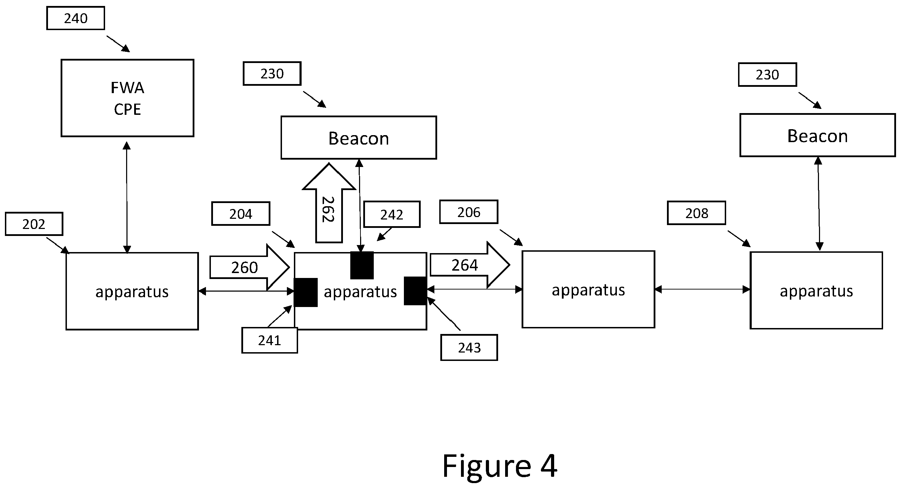

Figure 4 exemplifies any-to-any communication. The system of figure 4 is configured in the same way as the system of figure 2. In the example of figure 4, a first apparatus 202, second apparatus 204, third apparatus 206 and fourth apparatus 208 are connected in series to establish the fiber optic bus. As explained in the example of Figure 3, the second apparatus 204 may comprise a first port 241 connected to the first apparatus 202, a second port 242 connected to a node 230 and a third port 243 connected to the third apparatus 206.

The node 230 may be a master device comprising at least one of a PON ONU, FWA CPE, a modem, a router and a RGW. Alternatively, the node 230 maybe a client device or peripheral device comprising at least one of: a Wi-Fi beacon, set top box, a television, a network attached storage, a computer and a smart home device.

Additionally, at least one of the first apparatus 202, third apparatus 206 and fourth apparatus 208 may be connected to a client device or peripheral device comprising at least one of: a Wi-Fi beacon, set top box, a television, a network attached storage, a computer and a smart home device. The first apparatus 202, third apparatus 206 and fourth apparatus 208 may alternatively be connected to a master device comprising at least one of a PON ONU, FWA CPE, a modem, a router and a residential gateway RGW. For example, as shown in Figure 4, the first apparatus 202 is connected to a FWA CPE 240. Whilst in the example of Figure 4 master device is shown as being connected to the first apparatus 202, the master device could be located anywhere along the fiber optic bus.

The problem with previously known topologies is that it assumes that there is an 'ideal' central location to/from which all data should be communicated. However, the end-user may want to place the master router in any room in the home, and this location may change over time (e.g. over the lifespan of the fiber infrastructure or when changing access provider). The location for the master device may be based on e.g. the point of entry of the access connection. That point of entry (demarcation point) may be different for fiber, coax, twisted pair or fixed wireless access. For example, the end user may want to change location of the master device when he changes from one access service provider to another, depending on the location of the access modem (PON ONU, docsis CM, DSL xTU-R, FWA CPE) or RGW. Therefore, the proposed solution provides any-to-any communication which allows the location of the master device to be moved according to the demands of the system and allows increased adaptability of the system.

The system of figure 4 further comprises a passive device (not shown in figure 4) comprising means for dividing an input fiber optic signal received at the first port 241 into output signals to be transmitted from the second port 242 and third port 243. The passive device may be located in all of the apparatus 202, 204, 206, 208 or a combination therein. In Figure 4, the passive device and corresponding ports 241, 242, 243 are shown as located in the second apparatus, although a passive device of the same configuration may also be present in the third apparatus.

The passive device receives an input fiber optic signal 260 at the first port 241. The input fiber optic signal 260 was set from the first apparatus 202. The first apparatus may be connected to a master device 240 such as optical network unit (PON ONU), a fixed wireless access customer premise equipment (FWA CPE), a modem, a router or a residential gateway (RGW). The first apparatus 202 passes the input optical fiber signal 260 to the second apparatus 204 via the first port 241. Once the passive device receives the input fiber optic signal 260 at the first port 241 it divides the signal into a first output signal 262 and a second output signal 264. The first output signal 262 is transmitted from the second port 262 which is connected to a node 230, thereby, the node 230 apparatus receives a portion of the input fiber optic signal 260 transmitted from the first apparatus 202. The second output signal 264 is transmitted from the third port 243 which is connected to the third apparatus 206, thereby, the third apparatus 206 receives the remaining portion of the input fiber optic signal 260 transmitted from the first apparatus 202. In this way, the passive device acts as a means for dividing the signal received from the first apparatus 202. A first portion of the signal (i.e. the first output signal 262) leaves the fiber optic bus altogether when it is passed to the node 230 and a second portion of the signal (i.e. the second output signal 264) continues along the optical fiber bus to the third apparatus 206. This process may be repeated continuously along the fiber optic bus by the continued use of passive devices in each of the apparatus. There will be a natural limit on the number of possible apparatuses that can be maintained along the fiber optic bus, since a portion of the light (i.e. signal) is diverted off the bus at each apparatus.

The fiber optic bus can be configured to provide the same effect in either direction along the bus. For example, the passive device may also be capable of receiving an input signal at the third port and dividing it between the first and second port. This process can work in unison in both directions meaning that light is sent in both directions along the fiber optic bus.

The solution allows true any-to-any communication since all of the client devices and peripheral devices are able to communicate with each other. This means that you may use a technology that allows end devices to communicate to each other directly (which is not enabled on PON). For example, all of the Wi-Fi beacons shown in figure 4 are able to communicate with each other. Alternatively, the any-to-any communication system can allow all of the client device or peripheral device such as Wi-Fi beacons, set top boxes, televisions, network attached storages, computers and smart home devices to communicate with each other. This allows a connected home or building to be provided. In this way, traffic that is meant for internal consumption in the home or building, i.e. between two clients, does not need to go via the master node 220, but instead is more efficiently transmitted from one client to another. While current PON technology does not allow ONUs to communicate with each other directly, one could envisage an extension to the PON technology in which the PON Dynamic Bandwidth Assignment (DBA) algorithm allocates time slots for such direct communication between ONUs. Alternatively, another any-to-any optical technology is used, such as e.g. based on ITU G.hn.

The fiber optic bus can transmit an upstream fiber optic signal having a first wavelength in a first direction along the fiber optic bus and transmit a downstream fiber optic signal having a second wavelength in a second direction along the fiber optic bus. The first wavelength and second wavelength may be different and the first direction and second direction may be opposite. Using different wavelengths in the upstream and downstream directions ensures that the signals/light travelling in opposite directions can be easily distinguished by the apparatus and nodes that receive output light signals. It is understood that, while there is a single master node, there may be multiple client nodes. When TDMA is used in the upstream direction, i.e. towards the master node, then on an apparatus in between the master and the active client the direction of the upstream and downstream signals will be opposite. But on apparatus not between the master and the active client, both signals will travel in the same direction. Consequently, for any given apparatus, the direction of the upstream signal depends on the location of the active client relative to the apparatus, and may change over time as other clients are active in a TDMA fashion.

Alternatively, a single wavelength solution can be provided both upstream and downstream. The fiber optic bus can transmit a first fiber optic signal along the fiber optic bus at a first time and a transmit a second fiber optic signal along the fiber optic bus at a second time. The first and second fiber optic signals may have the same wavelength and the second time may be later than the first time. This provides a scheduled system which means that the signals/light travelling in opposite directions can be easily distinguished by the apparatus and nodes that receive output light signals. The apparatus and nodes are configured to expect to receive uplink or downlink signals based on the timing of transmission or arrival. This allows a single wavelength solution to be used whilst maintaining the fiber optic bus's ability to send and receive signals at a master device. The use of a single wavelength may lead to a lower cost solution. A further benefit of using a single wavelength is that the transceivers in all nodes are alike, any node may be configured as a master node. This may help build redundancy in the network, whereby if the master node fails, another node assumes the role of master. In this way, communication between clients can continue even if e.g. the modem connecting the in-building network with the internet has failed.

### Example passive devices

A candidate technology for FTTR is Passive Optical Networks (PON) technologies such as GPON or XGS-PON. They are characterized by their ability to meet a wide dynamic range (typically 15dB or more) and strong worst case path loss (typically around 30dB). The dynamic range indicates the relative power differences that can be detectable at the different output ports.

A passive device is an component which can only receive energy, which it can either pass through, dissipate, absorb or store it in an electric field or a magnetic field. Passive elements do not need any form of electrical power to operate. As the name 'passive' suggests - passive devices do not provide gain or amplification. Passive components are those that don't have the ability to be controlled by means of another electrical signal. Examples of passive electronic or optic components may include couplers, circulators, splitters, capacitors, resistors, inductors, transformers, and some diodes. Passive components cannot amplify, modulate, or generate an electrical signal. In contrast an active component is a component to which energy is supplied. Common examples of active components include: semiconductor optical amplifiers, voltage sources, current sources, generators (such as alternators and DC generators), transistors (such as bipolar junction transistors, MOSFETS, FETs, and JFET, and diodes (such as Zener diodes, photodiodes, Schottky diodes, and LEDs) or systems build thereof such as modems.

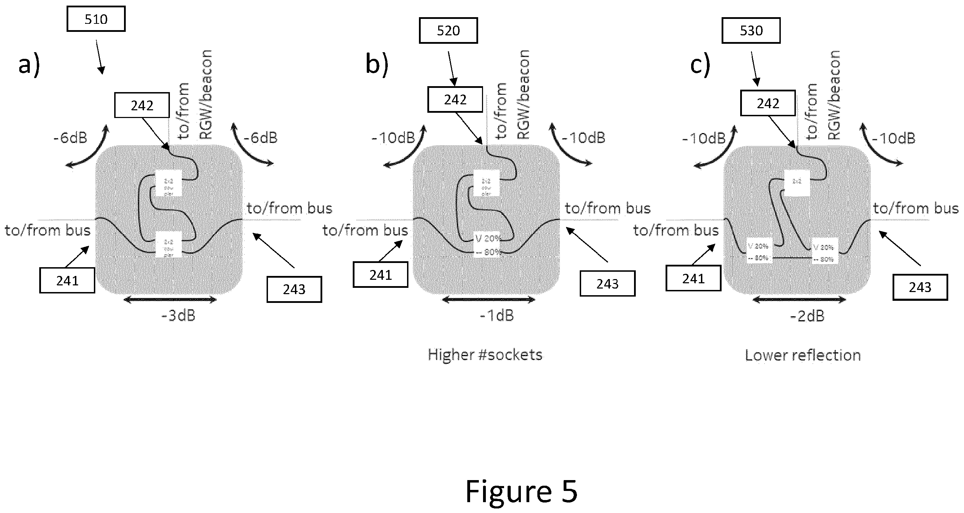

Example passive devices are shown in Figure 5. The approximate insertion loss to/from the different output ports are indicated by the numbers near the arrows.

Figure 5a shows a basic coupler comprising only two simple symmetric 2×2 couplers. Symmetric 2×2 couplers are designed to couple 50% of the light in each leg. When the solution according to Figure 5a is used, the passive device 510 will be configured to a provide a coupling ratio of 50:50. This means that when the passive device 510 receives the input fiber optic signal 260 it divides the signal into a first output signal 262 with 50% of light going to the first output signal 262 and a second output signal 264 which also receives 50%. Using a symmetric coupling situation is not preferable when a high number of sockets are required as only 50% of the light remains to travel onwards through the fiber optic bus.

Figure 5B shows a passive device 520 which is designed to work for a higher number of apparatuses. The passive device 520 comprises an asymmetric coupling configuration with a coupling ratio that may be within a range of 90:10 to 50:50. This means that when the passive device 520 receives the input fiber optic signal 260 it divides the signal into a first output signal 262 with less than 50% of light and the remaining light being in the second output signal 264. By transferring a greater amount of light along the optical bus rather than, for example, out to a node, a greater number of apparatuses may be allowed along the fiber optic bus. The bus-to-bus loss over the coupler together with the dynamic range of the active optical equipment dictates the number of termination sockets that can be passed. With a 15dB dynamic range and a 3dB bus-to-bus loss, you may cascade about 5 apparatuses in the bus. Therefore, Figure 5B shows a solution with low bus-to-bus loss, allowing a more practical number of optical termination sockets to be present in the bus network. It comes at the expense of higher bus-to-node loss. But for PON, that is not necessarily a problem thanks to its ability to overcome large loss budgets. In Figure 5b, the bottom 2×2 coupler is designed to be asymmetric, coupling more than 50% of the light bus-to-bus and coupling less light to/from the RGW out/into the bus.

Figure 5C demonstrates a further improvement compared to Figure 5b. The configuration of Figure 5C allows the reflection on the RGW output port to be significantly reduced by using an additional 2×2 coupler. The passive device 530 uses a coupling configuration comprising a first asymmetric coupler connected to the first port and a second asymmetric coupler connected to the third port and a symmetric coupler connected to the second port. The passive device 520 in figure 5C permits light coupling that reduces the amount of reflection experienced at the second port 242 so as to minimize signal interference caused by reflections.

Figures 5b and 5c show asymmetric couplers of the 20:80 ratio, however, conceivably any type of asymmetric coupler may used. A practical range is 50:50 to 90:10.

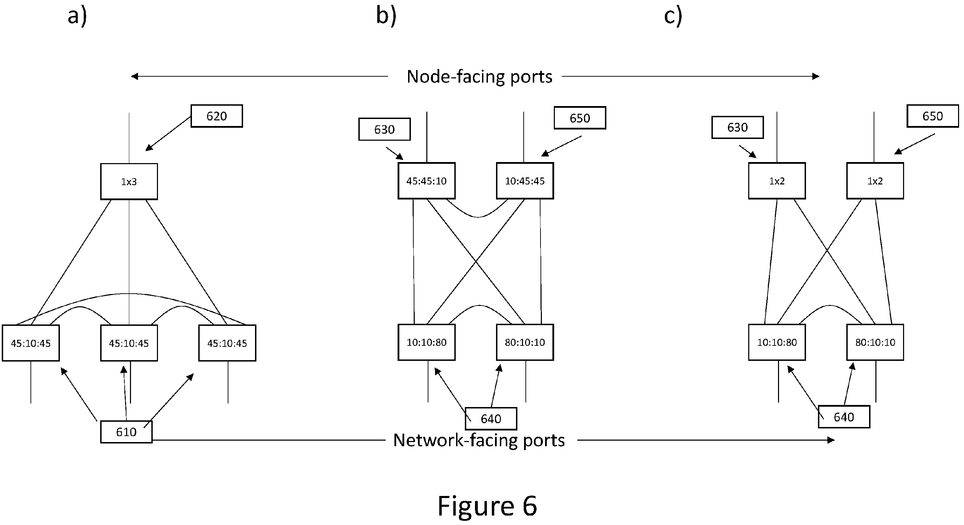

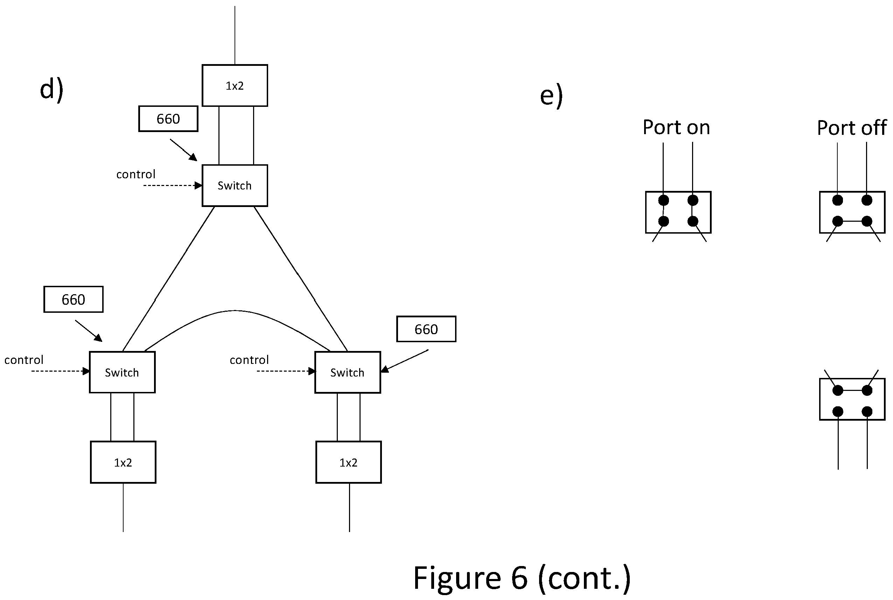

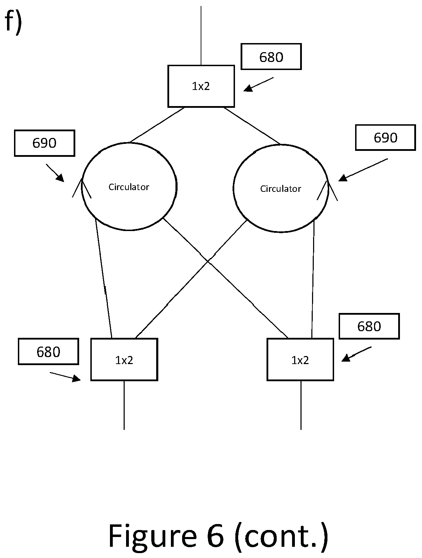

The above embodiments do not preclude apparatus with more than three ports. As shown in Figure 6, the apparatus may comprise three or more ports to connect to other apparatus via the fiber bus. In the example shown in Figure 6a, the port to connect to other apparatus 610 may comprise a three-way coupler with a 45:45:10 split ratio (roughly -4dB:-4dB:-10dB) that converts 40% of the light to each of the two other network-facing ports 610 and 20% of the light to the coupler connecting to the port to connect a node. That coupler connected to the node-facing port 620 may itself be a 1×3 symmetric splitter.

Similarly, the apparatus may comprise two or more ports to connect to two or more nodes. As shown in the example in Figure 6b, the port to connect to the node 630 may comprise a three-way coupler with a 45:45:10 split ratio that converts 45% of the light to each of the two network-facing ports 640 and 10% of the light to the other node-facing port 650. The coupler connected to the network-facing port 640 may be a 1×3 splitter with a 10:10:80 ratio, coupling 80% of light to the network-facing port and sending 10% to each of the node-facing ports 630, 650. This example allows the nodes connected to the apparatus to communicate with each other directly. To avoid the effects of misconfiguration, the two node-facing ports 630, 650 may be isolated from each other by simply using a 1×2 splitter for each port that only connects to the two network-facing ports 640, as shown in the example of Figure 6C. It is clear that other configurations with other number of network-facing 640 and node-facing ports 630, 650 are possible.

In another embodiment, the apparatus may contain one or more switches 660 with which the functionality of combination of passive elements in the apparatus may be altered, as shown in Figure 6D. Such switches 660 may be controlled in various ways, including electrical or optical or mechanical. In one example, the detection of light on a port may alter a configuration such as e.g. the split ratios. In another example, the configuration is altered depending on whether a connector is physically plugged into a port (mechanical switch). One use of such configurations is to avoid that light is routed to unused ports, so that a larger fraction of the light is routed to the used ports. This may be performed by an optical switch that routes the light as per earlier embodiments in the 'on' state, and routes the light to the other input port of the splitter in the 'off state. Examples of switches are shown in Figure 6E. Various optical switching technologies can be considered, such as a MEMS (Micro-Electro-Mechanical System) switch, a photonic integrated switch, a relay-based switch, a thermal-based switch, and so on.

Alternative designs are possible that may include circulators to route the light directionally. An example configuration comprising a circulator is shown in Figure 6F. The circulators 690 are shown as connected with three 1×2 680 couplers. The use of circulators allows further design freedom to adjust functionality of the apparatus, such as to route light directionally, to introduce directional-dependent splitter ratio's, wavelength filtering or switching.

### Method

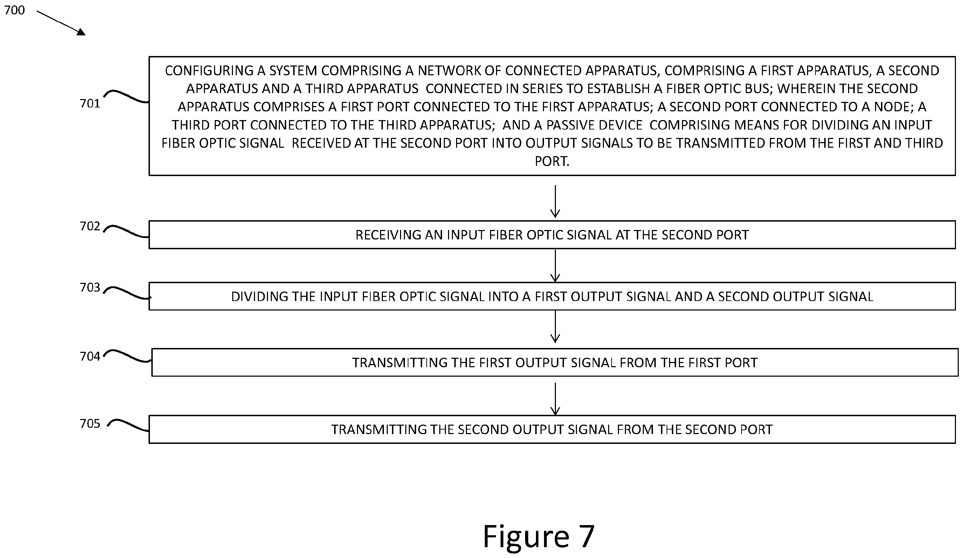

Figure 7 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 700 may comprise a first operation 701 of configuring a system according to the one-to-many configuration provided herein and shown in relation to figure 3.

The method 700 may comprise a second operation 702 of receiving the input fiber optic signal at the second port.

The method 700 may comprise a third operation 703 dividing the input fiber optic signal into a first output signal and a second output signal.

The method 700 may comprise a fourth operation 704 of transmitting the first output signal from the first port.

The method 700 may comprise a fifth operation 705 of transmitting the second output signal from the third port.

The fourth operation 704 and the fifth operation 705 may be carried out simultaneously or with either of the fourth operation and fifth operation carried out first and then followed by the other.

The method may be performed by an apparatus such as the system shown in figure 3 or by a control device configured to control the functioning thereof, when installed therein.

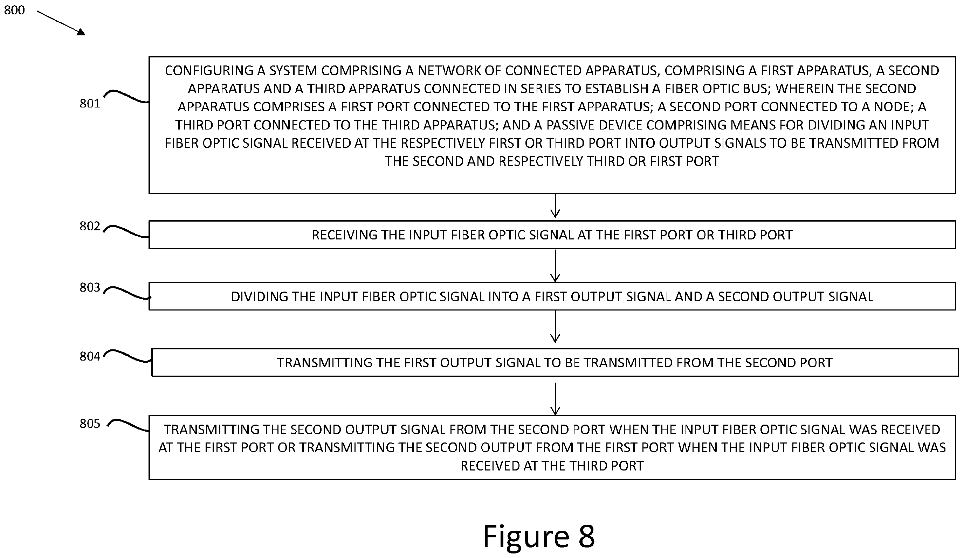

Figure 8 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 800 may comprise a first operation 801 of configuring a system according to the any-to-any configuration provided herein and shown in relation to figure 4.

The method 800 may comprise a second operation 802 of receiving the input fiber optic signal at the first port.

The method 800 may comprise a third operation 803 dividing the input fiber optic signal into a first output signal and a second output signal.

The method 800 may comprise a fourth operation 804 of transmitting the first output signal from the second port.

The method 800 may comprise a fifth operation 805 of transmitting the second output signal from the third port when the input fiber optic signal was received at the first port or transmitting the second output from the first port when the input fiber optic signal was received at the third port.

The fourth operation 804 and the fifth operation 805 may be carried out simultaneously or with either of the fourth operation and fifth operation carried out first and then followed by the other.

The method may be performed by an apparatus such as the system shown in figure 4 or by a control device configured to control the functioning thereof, when installed therein.

### Example Apparatus

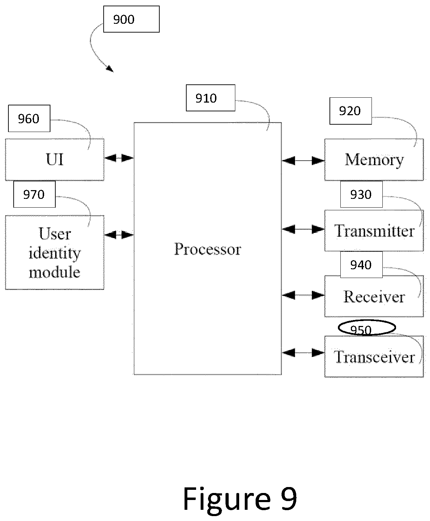

Figure 9 shows, by way of example, a block diagram of an apparatus capable of performing the method(s) as disclosed herein. Illustrated is device 900, which may comprise, for example, a mobile communication device such as mobile 100 of Figure 1. Comprised in device 900 is processor 910, which may comprise, for example, a single- or multi-core processor wherein a single-core processor comprises one processing core and a multi-core processor comprises more than one processing core. Processor 910 may comprise, in general, a control device. Processor 910 may comprise more than one processor. Processor 910 may be a control device. A processing core may comprise, for example, a Cortex-A8 processing core manufactured by ARM Holdings or a Steamroller processing core designed by Advanced Micro Devices Corporation. Processor 910 may comprise at least one Qualcomm Snapdragon and/or Intel Atom processor. Processor 910 may comprise at least one application-specific integrated circuit, ASIC. Processor 910 may comprise at least one field-programmable gate array, FPGA. Processor 910 may be means for performing method steps in device 900. Processor 910 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 900 may comprise memory 920. Memory 920 may comprise random-access memory and/or permanent memory. Memory 920 may comprise at least one RAM chip. Memory 920 may comprise solid-state, magnetic, optical and/or holographic memory, for example. Memory 920 may be at least in part accessible to processor 910. Memory 920 may be at least in part comprised in processor 910. Memory 920 may be means for storing information. Memory 920 may comprise computer instructions that processor 910 is configured to execute. When computer instructions configured to cause processor 910 to perform certain actions are stored in memory 920, and device 900 overall is configured to run under the direction of processor 910 using computer instructions from memory 920, processor 910 and/or its at least one processing core may be considered to be configured to perform said certain actions. Memory 920 may be at least in part external to device 900 but accessible to device 900.

Device 900 may comprise a transmitter 930. Device 900 may comprise a receiver 940. Transmitter 930 and receiver 940 may be configured to transmit and receive, respectively, information in accordance with at least one cellular or non-cellular standard. Transmitter 930 may comprise more than one transmitter. Receiver 940 may comprise more than one receiver. Transmitter 930 and/or receiver 940 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 900 may comprise a near-field communication, NFC, transceiver 950. NFC transceiver 950 may support at least one NFC technology, such as NFC, Bluetooth, Wibree or similar technologies.

Device 900 may comprise user interface, UI, 960. UI 960 may comprise at least one of a display, a keyboard, a touchscreen, a vibrator arranged to signal to a user by causing device 900 to vibrate, a speaker and a microphone. A user may be able to operate device 900 via UI 960, for example to accept incoming telephone calls, to originate telephone calls or video calls, to browse the Internet, to manage digital files stored in memory 920 or on a cloud accessible via transmitter 930 and receiver 940, or via NFC transceiver 950, and/or to play games.

Device 900 may comprise or be arranged to accept a user identity module 970. User identity module 970 may comprise, for example, a subscriber identity module, SIM, card installable in device 900. A user identity module 970 may comprise information identifying a subscription of a user of device 900. A user identity module 970 may comprise cryptographic information usable to verify the identity of a user of device 900 and/or to facilitate encryption of communicated information and billing of the user of device 900 for communication effected via device 900.

Processor 910 may be furnished with a transmitter arranged to output information from processor 910, via electrical leads internal to device 900, to other devices comprised in device 900. Such a transmitter may comprise a serial bus transmitter arranged to, for example, output information via at least one electrical lead to memory 920 for storage therein. Alternatively to a serial bus, the transmitter may comprise a parallel bus transmitter. Likewise processor 910 may comprise a receiver arranged to receive information in processor 910, via electrical leads internal to device 900, from other devices comprised in device 900. Such a receiver may comprise a serial bus receiver arranged to, for example, receive information via at least one electrical lead from receiver 940 for processing in processor 910. Alternatively to a serial bus, the receiver may comprise a parallel bus receiver.

Processor 910, memory 920, transmitter 930, receiver 940, NFC transceiver 950, UI 960 and/or user identity module 970 may be interconnected by electrical leads internal to device 900 in a multitude of different ways. For example, each of the aforementioned devices may be separately connected to a master bus internal to device 900, to allow for the devices to exchange information. However, as the skilled person will appreciate, this is only one example and depending on the embodiment various ways of interconnecting at least two of the aforementioned devices may be selected.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above-described blocks, apparatuses, systems, techniques or methods include, as non-limiting examples, implementations as hardware, software, firmware, special purpose circuits or logic, general purpose hardware or controller or other computing devices, or some combination thereof. Some embodiments maybe implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. A system comprising a network of connected apparatus, comprising:
a first apparatus, a second apparatus and a third apparatus connected in series to establish a fiber optic bus; wherein the second apparatus comprises
a first port connected to the first apparatus;
a second port connected to a node;
a third port connected to the third apparatus; and
a passive device comprising means for dividing an input fiber optic signal received at the second port into output signals to be transmitted from the first and third port.

2. A system comprising a network of connected apparatus, comprising:
a first apparatus, a second apparatus and a third apparatus connected in series to establish a fiber optic bus; wherein the second apparatus comprises
a first port connected to the first apparatus;
a second port connected to a node;
a third port connected to the third apparatus; and
a passive device comprising means for dividing an input fiber optic signal received at the first port into output signals to be transmitted from the second and third port.

3. The system of any preceding claim, wherein the node is a master device comprising at least one of: a passive optical network optical network unit (PON ONU), a fixed wireless access customer premise equipment (FWA CPE), a modem, a router and a residential gateway (RGW).

4. The system of any preceding claim, wherein at least one of the first, second and third apparatus are connected to a client device or peripheral device comprising at least one of: a Wi-Fi beacon, set top box, a television, a network attached storage, a computer and a smart home device.

5. The system of any preceding claim, wherein the passive device comprises a symmetric coupling configuration with a coupling ratio of 50:50.

6. The system of any of claims 1 to 4, wherein the passive device comprises an asymmetric coupling configuration with a coupling ratio within a range of 90:10 to 50:50.

7. The system of any of claims 1 to 4, wherein the passive device comprises a coupling configuration comprising a first asymmetric coupler connected to the first port and a second asymmetric coupler connected to the third port and a coupler connected to the second port.

8. The system of any preceding claim, wherein the second apparatus further comprises a fourth port connected to a second node or a fourth apparatus, and the passive device comprises a coupling configuration comprising at least four couplers.

9. The system of any preceding claim, wherein the passive device comprises a switch configured to turn on and/or off at least one of the first, second, third or fourth ports.

10. The system of any preceding claim, wherein the wavelength of the fiber optic signal transmitted on the second port is different from the wavelength of the fiber optic signal received on the second port.

11. The system of any preceding claim, wherein the apparatus further comprises means for:
transmitting a first fiber optic signal from the second port at a first time;
receiving a second fiber optic signal at the second port at a second time;
wherein first and second fiber optic signals have the same wavelength and the second time is later than the first time.

12. The system of any preceding claim, wherein the connected apparatus is distributed throughout a building and wherein the first, second and third apparatus are built into wall sockets or wall mounted.

13. The system of any preceding claim, wherein the second port comprises a colour, form factor or unique identifier which is different from those of the first and third ports.

14. A method of using a network of connected apparatus, comprising:
configuring a system according to claim 1 or claims 3 to 13 when dependent on claim 1;
receiving the input fiber optic signal at the second port;
dividing the input fiber optic signal into a first output signal and a second output signal;
transmitting the first output signal from the first port;
transmitting the second output signal from the third port.

15. A method of using a network of connected apparatus, comprising:
configuring a system according to claim 2 or claims 3 to 13 when dependent on claim 2;
receiving the input fiber optic signal at the first port;
dividing the input fiber optic signal into a first output signal and a second output signal;
transmitting the first output signal from the second port;
transmitting the second output signal from the third port.
